# EUROPEAN PATENT SPECIFICATION

(11) **EP 3 312 485 B1**
(45) Date of publication and mention of the grant of the patent: **11.12.2019**
(21) Application number: 16002761.1
(22) Date of filing: 23.12.2016
(51) Int. Cl.: F16K 35/02, E03C 1/04, F16K 11/20, F16K 31/00

(54) **A TEMPERATURE LIMITING ADJUSTABLE DEVICE**
EINSTELLBARE TEMPERATURBEGRENZUNGSVORRICHTUNG
DISPOSITIF RÉGLABLE DE LIMITATION DE TEMPÉRATURE

(30) Priority: 20.10.2016 CN 201610912991
(43) Date of publication of application: 25.04.2018
(73) Proprietor: Xiamen Solex High-Tech Industries Co., Ltd., Xiamen Area of China (Fujian) Pilot Free Trade Zone (CN)
(72) Inventor: LIN, Fangqi, Fujian, 361000 (CN); WEI, Zhijian, Fujian, 361000 (CN); HU, Lihong, Fujian, 361000 (CN)
(74) Representative: Verscht, Thomas Kurt Albert

(56) References cited:
- EP-A1- 3 054 365
- WO-A1-2005/003877
- GB-A- 2 251 479
- US-A- 6 098 954
- US-B1- 6 283 447
- US-B1- 6 626 203

## Description

### Field of the invention

The present invention relates to sanitary ware, particularly to a temperature limiting adjustable device.

### Background of the invention

Traditional shower device is disposed with a handle, user can rotate the handle left and right to adjust the mixing proportion of hot and cool water, thus adjusting the outlet water temperature. But this kind of temperature adjusting is not intuitive and the temperature is difficult to adjust and control, the strength of the user rotating the handle is also difficult to control, the water temperature is usually over high or over cool. In addition, the user needs to re-adjust the temperature each time before the shower, making the user experience bad.

There is a kind of constant temperature shower device in the market that the outlet water temperature can be precisely controlled. Traditional constant temperature shower device is disposed with a lower temperature point and a high temperature point, the user rotates the temperature adjusting handle to adjust the temperature between the low temperature point and the high temperature point. The outlet water temperature doesn't change after being adjusted to a proper value, only if the handle is not touched, making the user experience well. However, this kind of shower device has shortcomings, the high temperature point of the shower device is usually set to 38°, which is suitable for most people, if one user needs a higher temperature, he needs to press the handle to adjust in the high temperature adjusting area. Usually, user just needs about 40° of water temperature, but he needs to adjust in the high temperature area just for increasing 2°C of water temperature, making the adjusting inconvenient and unsafe, easily resulting in scald event. From EP 3 054 365 A1 a thermostat for a radiator is known, including a base part, which is adapted to be fixed in relation to a valve of the radiator, and a knob, which is attached, turnably around an axis, to the base part in such a way that it can be used to change the setting of the thermostat within a given range by turning the knob. The thermostat further comprises a first and second adjustable limiter, respectively setting a maximum and a minimum level, such that the knob is rotatable only within a sub-portion of the given range.

### Summary of the invention

The present invention is provided with a temperature limiting adjustable device, the high temperature limiting of the constant temperature shower device is adjustable to suit for different people and different season.

The technical solution of the present invention is that: A temperature limiting adjustable device, wherein comprising an operation element, a temperature limiting element, a switch element, a position limiting element and a temperature adjusting element;
the temperature limiting element is disposed with at least two temperature limiting gears, the operation element controls the switch element to switch between temperature limiting gears, the switch element is locked to the temperature limiting gear after switching;
the switch element is linked to the position limiting element, the position limiting element is disposed with a high temperature end and a low temperature end; the temperature adjusting element is disposed with an abutting element movable between the high temperature end and the low temperature end to abut against the temperature adjusting element for position limit;
when the switch element is switched to different temperature limiting gears, the position limiting element moves accordingly and makes the position of the high temperature end and the low temperature end change, thus making the temperature adjusting range of the temperature adjusting element change accordingly.

In another preferred embodiment, the operation element is subjected to external force to provide squeeze force to the switch element, the switch element moves away from the present temperature limiting gear under the squeeze force; when the operation element moves to drive the switch element to move to another temperature limiting gear and the external force is released, the switch element is locked to the temperature limiting gear.

In another preferred embodiment, the operation element is a button; the switch element comprises a micro-variation ring, the top end face of the micro-variation ring is disposed with an insert hole for the end of the button to insert, the side wall of the insert hole extends outwardly with a lock strip.

In another preferred embodiment, the temperature limiting element comprises a base, the base is disposed with a chamber to place the micro-variation ring, the side wall of the chamber is disposed with a groove for the button to move; the inner wall of the chamber is disposed with at least two lock teeth served as the temperature limiting gears along the long side of the groove; the lock strip is locked to the lock teeth.

In another preferred embodiment, the position limiting element comprises a main body with a cavity with two ends opening, the side wall of the cavity is disposed with a hole; the cavity encases the chamber, the button is exposed out of the side wall of the main body through the hole; when the button moves along the length direction of the groove, the main body moves with respect to the base.

In another preferred embodiment, the end of the side wall of the cavity away from the hole is further disposed with a lock groove, the end of the micro-variation ring away from the lock strip extends outwardly with a boss, the boss is linked to the lock groove.

In another preferred embodiment, the end of the main body away from the base is disposed with an annular boss ring; the surface of the annular boss ring extends outwardly vertically with a first stop wall and a second stop wall to form the high temperature gear end and the low temperature gear end.

In another preferred embodiment, the temperature adjusting element comprises a handle and a position pin; the handle is connected to the end of the main body away from the base, and is rotatably connected to a valve spool; the end of the position pin is disposed in the corresponding temperature adjusting interval of the annular boss ring between the first stop wall and the second stop wall, forming the abutting element.

In another preferred embodiment, it comprises three temperature limiting gears, the corresponding high temperature limiting end are respectively 36°, 38° and 40°.

Compared to traditional technology, the technical solution of the present invention has following advantages:
The temperature limiting adjustable device of the present invention is provided that when the switch element is switched to different temperature limiting gear, the position limiting element moves accordingly and makes the position of the high temperature end and the low temperature end change, thus making the temperature adjusting range of the temperature adjusting element change accordingly. If the water temperature needs to change from 38° to 40°, the user just needs to adjust the switch element and rotates the temperature adjusting element to the highest temperature, but not to press the button of the temperature adjusting element to adjust in the high temperature area. It avoids the user from scale due to high temperature when adjusting the temperature in high temperature area. Every one in the family can adjust the highest temperature in a certain range, thus to choose his own shower temperature. In another situation, the highest temperature can be changed according to different season to suit for different environment temperature to shower. The present invention increases safety and comfort.

### Brief description of the drawings

FIG.1 illustrates an exploded and schematic diagram of a preferred embodiment of the present invention.
FIG.2 illustrates a sectional diagram of the preferred embodiment of the present invention.
FIG.3 illustrates a schematic diagram of a button and a micro-variation ring of the preferred embodiment of the present invention.
FIG.4 illustrates a schematic diagram of a base of the preferred embodiment of the present invention.
FIG.5 illustrates a schematic diagram of a main body of the preferred embodiment of the present invention.
FIG.6 illustrates a schematic diagram of a main body another preferred embodiment of the present invention.
FIG.7 illustrates a sectional diagram of the preferred embodiment of the present invention when the high temperature end is configured to 36°.
FIG.8 illustrates a sectional diagram of the preferred embodiment of the present invention when the high temperature end is configured to 38°.
FIG.9 illustrates a sectional diagram of the preferred embodiment of the present invention when the high temperature end is configured to 40°.

### Detailed description of the embodiments

The present invention will be further described with the drawings and embodiments.

### Embodiment 1:

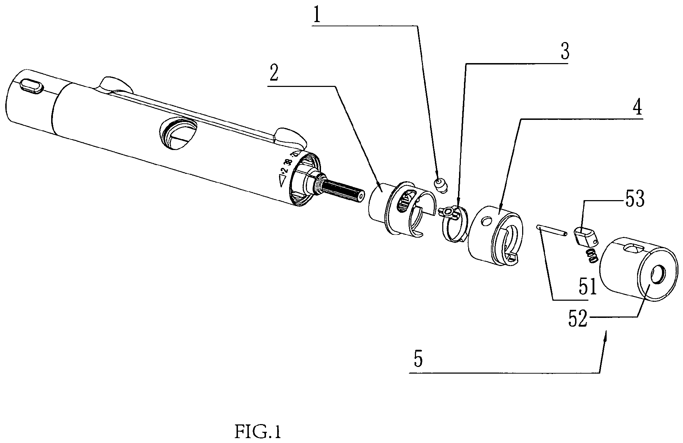

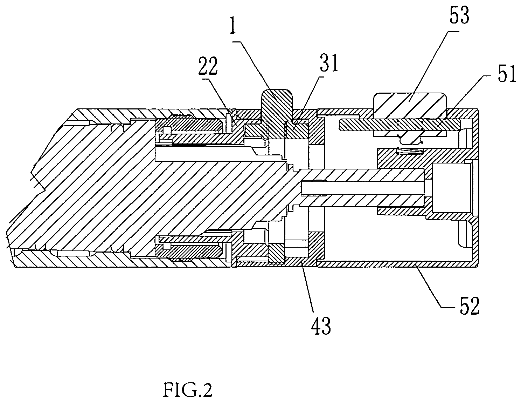

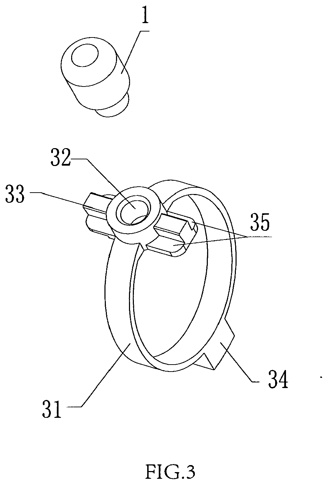

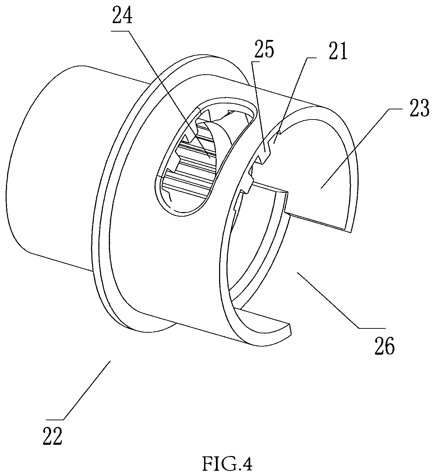

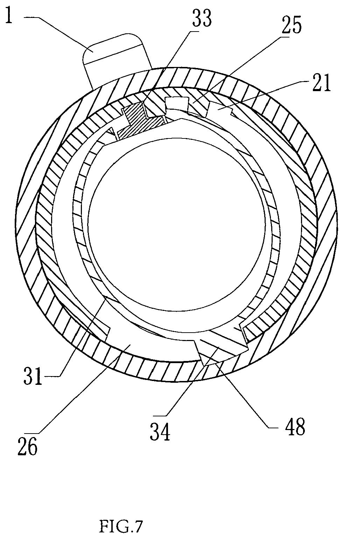

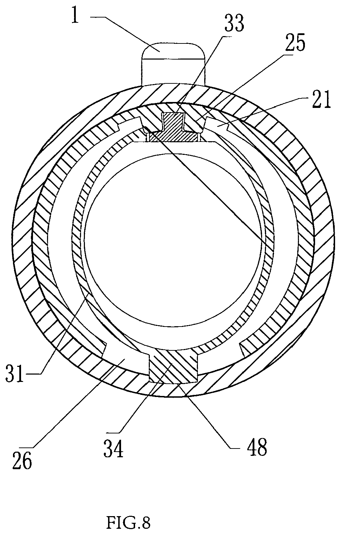

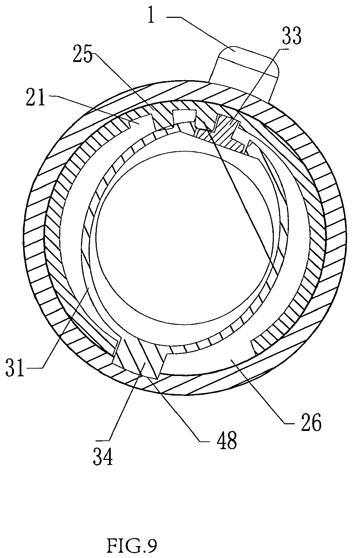

Referring to FIGS.1-9, a temperature limiting adjustable device comprises an operation element 1, a temperature limiting element 2, a switch element 3, a position limiting element 4 and a temperature adjusting element 5;
The temperature limiting element 2 is disposed with at least two temperature limiting gears 21, in this embodiment, the number is three. The operation element 1 controls the switch element 3 to switch between the temperature limiting gears 21, the switch element 3 is locked to the temperature limiting gear 21 after switching;
The switch element 3 is linked to the position limiting element 4, the position limiting element 4 is disposed with a high temperature end 41 and a low temperature end 42; the temperature adjusting element 5 is disposed with an abutting element 51 movable between the high temperature end 41 and the low temperature end 42 to abut against the temperature adjusting element 5 for position limit;
When the switch element 3 is switched to different temperature limiting gears 21, the position limiting element 4 moves accordingly and makes the position of the high temperature end 41 and the low temperature end 42 change, thus making the temperature adjusting range of the temperature adjusting element 5 change accordingly. When the switch element 3 is switched among the three temperature limiting gears 21, the high temperature limiting end is switched among 36°, 38° and 40°. Therefore, above mentioned temperature limiting adjustable device is provided that when the switch element 3 is switched to different temperature limiting gears 21, the position limiting element 4 moves accordingly and makes the position of the high temperature end 41 and the low temperature end 42 change, thus making the temperature adjusting range of the temperature adjusting element 5 change accordingly. If the water temperature needs to change from 38° to 40°, the user just needs to adjust the switch element 3 and rotates the temperature adjusting element 5 to the highest temperature, but not to press the button of the temperature adjusting element 5 to adjust in the high temperature area. It avoids the user from scale due to high temperature when adjusting the temperature in high temperature area. Every one in the family can adjust the highest temperature in a certain range, thus to choose his own shower temperature. In another situation, the highest temperature can be changed according to different season to suit for different environment temperature to shower. The present invention increases safety and comfort.

In detailed, the present invention is provided that:
The operation element 1 is a button; the switch element 3 comprises a micro-variation ring 31, the top end face of the micro-variation ring 31 is disposed with an insert hole 32 for the end of the button to insert, the side wall of the insert hole 32 extends outwardly with at least a support block 35 and at least a lock strip 33, the support block 35 and the lock strip 33 can be integrally configured; in this embodiment, the lock strip 33 is disposed on the top surface of the support block and is protruding upwardly with respect to the top surface of the support block 35.

The temperature limiting element 2 comprises a base 22, the base 22 is disposed with a chamber 23 to place the micro-variation ring 31, the side wall of the chamber 23 is disposed with a groove 24 for the button to move; the inner wall of the chamber 23 is disposed with three lock teeth 25 served as the temperature limiting gears 21 along the long side of the groove 24; the lock strip 33 is locked to the lock teeth 25.

When a user pressed the button, the micro-variation ring deforms under the squeeze force, the lock strip 33 escapes from the lock tooth 25. If the user moves the button along the length direction of the groove 24, the lock strip 33 is driven to move a position corresponding to other lock teeth 25, at this time, the user releases the force to the button, the external force to the micro-variation ring 31 disappears, the micro-variation ring resets under the self elastic reset force, making the lock strip 33 locked to the lock tooth 25 of the present position, thus achieving gear switch.

The end of the side wall of the chamber 23 away from the groove 24 is further disposed with a notch 26; the end of the micro-variation ring 31 away from the lock strip 33 extends out with a boss 34; when the lock strip 33 is locked to the left-most side or the right-most side of the lock tooth 25, the notch 26 provides space for the boss 34 to move; at the same time, the button 1 abuts against the left end or the right end of the groove 24. Therefore, the user can just move the button to drive the micro-variation ring 31 to move left or right to the end and release the button, the lock strip 33 can be ensured to lock to the left-most or right-most lock tooth; the operation gear feeling is strong, efficiently improving the indication and success of the gear switch.

The position limiting element 4 comprises a main body 43 with a cavity 44 with two ends opening, the side wall of the cavity 44 is disposed with a hole 45; the cavity 44 encases the chamber 23, the button is exposed out of the side wall of the main body 43 through the hole 45; when the button moves along the length direction of the groove 24, as the outer wall of the button abuts against the inner wall of the hole 45, the main body 43 moves with respect to the base 22 with the movement of the button.

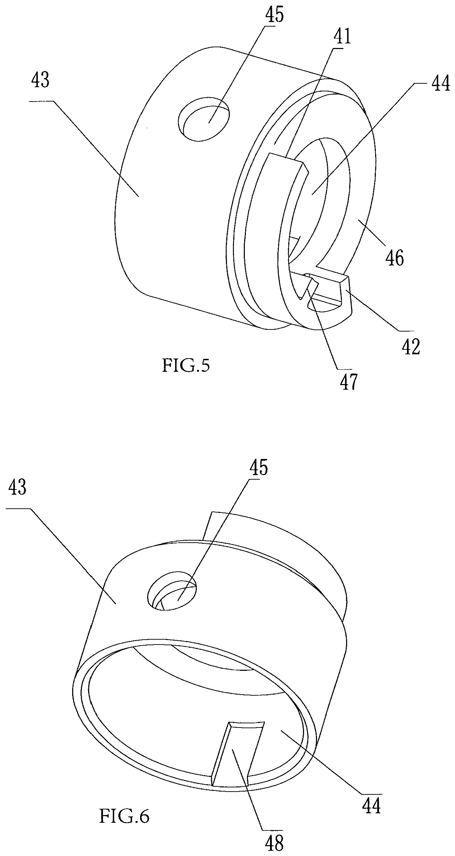

Further referring to FIG.6, the side wall of the cavity 44 is further disposed with a lock groove 48, the boss 34 inserts to the lock groove 48 to abut against the lock groove, when the button moves along the length direction of the groove 24, under the action of the boss 34 and the lock groove 48, the main body 43 rotates with respect to the base 22, thus improving the reliability of the link of the switch element 3 and the position limiting element 4.

The boss 34 and the two ends of the insert hole 32 are connected in an arc to form a closing annular structure to form the micro-variation ring 31, the diameter of the outer wall of the arc is smaller than the internal diameter of the chamber 23; when the micro-variation ring 31 deforms under the action of the button, a gap exists between the outer wall of the arc and the inner wall of the chamber 23, therefore, when the micro-variation ring 31 drives the main body 43 to rotate, no friction exists between the micro-variation ring 31 and the chamber 23, thus making the switch hand feeling light.

The end of the main body 43 away from the base 22 is disposed with an annular boss ring 46; the surface of the annular boss ring 46 extends outwardly vertically with a first stop wall and a second stop wall to form the high temperature gear end 41 and the low temperature gear end 42.

The base 22 is disposed with a through hole in the axial direction, the main component of the shower device is disposed with a temperature adjusting valve spool, the spline end of the valve spool passes through the base 22 and the main body 43 through the through hole and the opening.

The temperature adjusting element 5 comprises a handle 52 and a position pin; the handle 52 is connected to the end of the main body 43 away from the base 22, and is rotatably connected to the spline of the valve spool; the end of the position pin is disposed in the corresponding temperature adjusting interval of the annular boss ring between the first stop wall and the second stop wall, forming the abutting element 51. When the handle 52 is rotated, the position pin moves in the temperature adjusting interval between the first stop wall and the second stop wall; as the temperature adjusting element 5 is rotatably connected to the spline of the vale spool, the valve spool rotates accordingly to change the outlet water temperature; when the temperature adjusting element rotates to make the position pin abut against the high temperature end 41 or the low temperature end 42, the temperature adjusting element 5 can not rotate furthermore, reaching to the highest temperature and lowest temperature of present gear. The position of the high temperature end 41 or the low temperature end 42 can be changed by rotating the main body 43, thus changing the value of the highest temperature and the lowest temperature and achieving the object of the present invention.

In this embodiment, the handle is further disposed with a temperature adjusting button 53, which is disposed with a throughout hole along the length direction of the handle, the position pin passes through the throughout hole to link to the temperature adjusting button 52; the end of the high temperature end 41 away from the temperature adjusting area extends to the low temperature end and connects to the low temperature end to form an arc surrounding wall, the inner wall of the surrounding wall extends out with a highest temperature end 47 in the radial direction. When the temperature adjusting button 53 is pressed, the position pin moves down in the radial direction, thus missing the high temperature end, at this time, rotating the handle 52, the position pin passes the highest temperature end 41 and rotates continuously until the position pin abuts against the highest temperature end 47, the position pin can not rotate furthermore. Temperature adjusting in the high temperature area is achieved.

In detailed, the thickness of the arc surrounding wall and the height of the highest temperature end protruding out can be configured that when the button 52 is pressed and the position pin 51 retracts, the position pin can pass the high temperature end 41 but not reach beyond the highest temperature end 47.

The invention may be summarized as follows: The present invention is provided with a temperature limiting adjustable device, which comprises an operation element, a temperature limiting element, a switch element, a position limiting element and a temperature adjusting element; the temperature limiting element is disposed with at least two temperature limiting gears, the operation element controls the switch element to switch between the temperature limiting gears, the switch element is locked to the temperature limiting gear after switching; the switch element is linked to the position limiting element, the position limiting element is disposed with a high temperature end and a low temperature end; the temperature adjusting element is disposed with an abutting element movable between the high temperature end and the low temperature end to abut against the temperature adjusting element for position limit; when the switch element is switched to different temperature limiting gears, the position limiting element moves accordingly and makes the position of the high temperature end and the low temperature end change, thus making the temperature adjusting range of the temperature adjusting element change accordingly. The present invention is provided with a temperature limiting adjustable device, the high temperature limiting of the constant temperature shower device is adjustable to suit for different people and different season.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A temperature limiting adjustable device, comprising an operation element (1), a temperature limiting element (2), a switch element (3), a position limiting element (4) and a temperature adjusting element (5);
the temperature limiting element (2) is disposed with at least two temperature limiting gears (21), the operation element (1) controls the switch element (3) to switch between the temperature limiting gears (21), the switch element (3) is locked to the temperature limiting gear (21) after switching;
the switch element (3) is linked to the position limiting element (4), the position limiting element (4) is disposed with a high temperature end (41) and a low temperature end (42);
when the switch element (3) is switched to different temperature limiting gears (21), the position limiting element (4) moves accordingly and makes the position of the high temperature end (41) and the low temperature end (42) change, thus making the temperature adjusting range of the temperature adjusting element (5) change accordingly,
**characterized in that**
the temperature adjusting element (5) is disposed with an abutting element (51) movable between the high temperature end (41) and the low temperature end (42) to abut against the temperature adjusting element (5) for position limit.

2. The temperature limiting adjustable device according to claim 1, wherein the operation element (1) is subjected to external force to provide squeeze force to the switch element (3), the switch element (3) moves away from the present temperature limiting gear (21) under the squeeze force; when the operation element (1) moves to drive the switch element (3) to move to another temperature limiting gear (21) and the external force is released, the switch element (3) is locked to the temperature limiting gear (21).

3. The temperature limiting adjustable device according to claim 1 and/or 2, wherein the operation element (1) is a button; the switch element (3) comprises a micro-variation ring (31), the top end face of the micro-variation ring (31) is disposed with an insert hole (32) for the end of the button to insert (32), the side wall of the insert hole extends outwardly with a lock strip (33).

4. The temperature limiting adjustable device according to claim 3, wherein the temperature limiting element (2) comprises a base (22), the base (22) is disposed with a chamber (23) to place the micro-variation ring (31), the side wall of the chamber (23) is disposed with a groove (24) for the button to move; the inner wall of the chamber (23) is disposed with at least two lock teeth (25) served as the temperature limiting gears (21) along the long side of the groove (24); the lock strip (33) is locked to the lock teeth (25).

5. The temperature limiting adjustable device according to claim 4, wherein the position limiting element (4) comprises a main body (43) with a cavity (44) with two ends opening, the side wall of the cavity (44) is disposed with a hole (45); the cavity (44) encases the chamber (23), the button is exposed out of the side wall of the main body (43) through the hole (45); when the button moves along the length direction of the groove (24), the main body (43) moves with respect to the base (22).

6. The temperature limiting adjustable device according to claim 5, wherein the end of the side wall of the cavity (44) away from the hole (45) is further disposed with a lock groove (48), the end of the micro-variation ring (31) away from the lock strip (33) extends outwardly with a boss (34), the boss (34) is linked to the lock groove (48).

7. The temperature limiting adjustable device according to any one or more of claims 4 to 6, wherein the end of the main body (43) away from the base (22) is disposed with an annular boss ring (46); the surface of the annular boss ring (46) extends outwardly vertically with a first stop wall and a second stop wall to form the high temperature gear end (41) and the low temperature gear end (42).

8. The temperature limiting adjustable device according to claim 7, wherein the temperature adjusting element (5) comprises a handle (52) and a position pin; the handle (52) is connected to the end of the main body (43) away from the base (22), and is rotatably connected to a valve spool; the end of the position pin is disposed in the corresponding temperature adjusting interval of the annular boss ring between the first stop wall and the second stop wall, forming the abutting element (51).

9. The temperature limiting adjustable device according to any one or more of claims 1 to 7, comprising three temperature limiting gears (21), the corresponding high temperature limiting end are respectively 36°, 38° and 40°.

## Patentansprüche

1. Eine einstellbare Temperaturbegrenzungseinrichtung, die ein Betriebselement (1), ein Temperaturbegrenzungselement (2), ein Schaltelement (3), ein Positionsbegrenzungselement (4) und ein Temperatureinstellelement (5) aufweist;
das Temperaturbegrenzungselement (2) ist mit wenigstens zwei Temperaturbegrenzungszahnrädern (21) angeordnet, das Betriebselement (1) steuert das Schaltelement (3), um zwischen den Temperaturbegrenzungszahnrädern (21) zu schalten, das Schaltelement (3) ist mit dem Temperaturbegrenzungszahnrad (21) nach dem Schalten verriegelt;
das Schaltelement (3) ist mit dem Positionsbegrenzungselement (4) verbunden, das Positionsbegrenzungselement (4) ist mit einem Hochtemperaturende (41) und einem Niedrigtemperaturende (42) angeordnet;
wenn das Schaltelement (3) zu verschiedenen Temperaturbegrenzungszahnrädern (21) geschaltet wird, bewegt sich das Positionsbegrenzungselement (4) dementsprechend und macht, dass sich die Position des Hochtemperaturendes (41) und des Niedrigtemperaturendes (42) ändert, wodurch somit gemacht wird, dass der Temperatureinstellbereich des Temperatureinstellelements (5) dementsprechend ändert, **dadurch gekennzeichnet, dass** das Temperatureinstellelement (5) mit einem Anlageelement (51) angeordnet ist, das zwischen dem Hochtemperaturende (41) und dem Niedrigtemperaturende (42) bewegbar ist, um gegen das Temperatureinstellelement (5) zur Positionsbegrenzung anzuliegen.

2. Die einstellbare Temperaturbegrenzungseinrichtung nach Anspruch 1, wobei das Betriebselement (1) einer äußeren Kraft ausgesetzt ist, um eine Zusammendrückkraft für das Schaltelement (3) bereitzustellen, das Schaltelement (3) bewegt sich unter der Zusammendrückkraft von dem vorliegenden Temperaturbegrenzungszahnrad (21) weg; wenn sich das Betriebselement (1) bewegt, um das Schaltelement (3) anzutreiben, um sich zu einem anderen Temperaturbegrenzungszahnrad (21) zu bewegen, und die äußere Kraft freigegeben ist, ist das Schaltelement (3) mit dem Temperaturbegrenzungszahnrad (21) verriegelt.

3. Die einstellbare Temperaturbegrenzungseinrichtung nach Anspruch 1 und/oder 2, wobei das Betriebselement (1) ein Knopf ist; das Schaltelement (3) weist einen Mikrovariationsring (31) auf, die obere Endstirnseite des Mikrovariationsrings (31) ist mit einem Einsetzloch (32) für das Ende des Knopfes zum Einsetzen (32) angeordnet, die Seitenwand des Einsetzloches erstreckt sich mit einem Verriegelungsstreifen (33) nach außen.

4. Die einstellbare Temperaturbegrenzungseinrichtung nach Anspruch 3, wobei das Temperaturbegrenzungselement (2) eine Basis (22) aufweist, die Basis (22) ist mit einer Kammer (23) zum Platzieren des Mikrovariationsrings (31) angeordnet, die Seitenwand der Kammer (23) ist mit einer Nut (24) zum Bewegen des Knopfs angeordnet; die Innenwand der Kammer (23) ist mit wenigstens zwei Verriegelungszähnen (25) angeordnet, die als Temperaturbegrenzungszahnräder (21) entlang der langen Seite der Nut (24) dienen; der Verriegelungsstreifen (33) ist mit den Verriegelungszähnen (25) verriegelt.

5. Die einstellbare Temperaturbegrenzungseinrichtung nach Anspruch 4, wobei das Positionsbegrenzungselement (4) einen Hauptkörper (43) mit einem Hohlraum (44) mit zwei sich öffnenden Enden aufweist, die Seitenwand des Hohlraums (44) ist mit einem Loch (45) angeordnet; der Hohlraum (44) umschließt die Kammer (23), der Knopf ist durch das Loch (45) aus der Seitenwand des Hauptkörpers (43) freigelegt; wenn der Knopf sich entlang der Längsrichtung der Nut (24) bewegt, bewegt sich der Hauptkörper (43) in Bezug zu der Basis (22).

6. Die einstellbare Temperaturbegrenzungseinrichtung nach Anspruch 5, wobei das von dem Loch (45) entfernte Ende der Seitenwand des Hohlraums (44) ferner mit einer Verriegelungsnut (48) angeordnet ist, das von dem Verriegelungsstreifen (33) entfernte Ende des Mikrovariationsrings (31) erstreckt sich mit einem Vorsprung (34) nach außen, der Vorsprung (34) ist mit der Verriegelungsnut (48) verbunden.

7. Die einstellbare Temperaturbegrenzungseinrichtung nach einem oder mehreren der Ansprüche 4 bis 6, wobei das von der Basis (22) entfernte Ende des Hauptkörpers (43) mit einem ringförmigen Vorsprungring (46) angeordnet ist; die Oberfläche des ringförmigen Vorsprungrings (46) erstreckt sich vertikal nach außen mit einer ersten Anschlagwand und einer zweiten Anschlagwand, um das Hochtemperaturzahnradende (41) und das Niedrigtemperaturzahnradende (42) zu bilden.

8. Die einstellbare Temperaturbegrenzungseinrichtung nach Anspruch 7, wobei das Temperatureinstellelement (5) einen Griff (52) und einen Positionsstift aufweist; der Griff (52) ist mit dem von der Basis (22) entfernten Ende des Hauptkörpers (43) verbunden, und ist drehbar mit einem Ventilschieber verbunden; das Ende des Positionsstiftes ist in dem entsprechenden Temperatureinstellintervall des ringförmigen Vorsprungringes zwischen der ersten Anschlagwand und der zweiten Anschlagwand angeordnet, wodurch das Anlageelement (51) gebildet ist.

9. Die einstellbare Temperaturbegrenzungseinrichtung nach einem oder mehreren der Ansprüche 1 bis 7, wobei diese drei Temperaturbegrenzungszabnräder (21) aufweist, wobei die entsprechenden Hochtemperaturbegrenzungsenden jeweils 36°, 38° und 40° sind.

## Revendications

1. Dispositif réglable de limitation de température, comprenant un élément de fonctionnement (1), un élément de limitation de température (2), un élément de commutation (3), un élément de limitation de position (4) et un élément de réglage de température (5) ;
l'élément de limitation de température (2) est disposé avec au moins deux engrenages de limitation de température (21), l'élément de fonctionnement (1) commande l'élément de commutation (3) pour commuter entre les engrenages de limitation de température (21), l'élément de commutation (3) est verrouillé à l'engrenage de limitation de température (21) après commutation ;
l'élément de commutation (3) est lié à l'élément de limitation de position (4), l'élément de limitation de position (4) est disposé avec une extrémité à température élevée (41) et une extrémité à température basse (42) ;
lorsque l'élément de commutation (3) est commuté à différents engrenages de limitation de température (21), l'élément de limitation de position (4) se déplace en conséquence et fait changer la position de l'extrémité à température élevée (41) et l'extrémité à température basse (42), faisant ainsi changer la plage de réglage de température de l'élément de réglage de température (5) en conséquence, **caractérisé en ce que**
l'élément de réglage de température (5) est disposé avec un élément de butée (51) mobile entre l'extrémité à température élevée (41) et l'extrémité à température basse (42) pour buter contre l'élément de réglage de température (5) pour la limite de position.

2. Dispositif réglable de limitation de température selon la revendication 1, dans lequel l'élément de fonctionnement (1) est soumis à une force externe pour fournir une force de serrage à l'élément de commutation (3), l'élément de commutation (3) s'éloigne du présent engrenage de limitation de température (21) sous la force de serrage ; lorsque l'élément de fonctionnement (1) se déplace pour entraîner l'élément de commutation (3) à se déplacer vers un autre engrenage de limitation de température (21) et la force externe est libérée, l'élément de commutation (3) est verrouillé à l'engrenage de limitation de température (21).

3. Dispositif réglable de limitation de température selon la revendication 1 et/ou 2, dans lequel l'élément de fonctionnement (1) est un bouton ; l'élément de commutation (3) comprend un anneau de micro-variation (31), la face d'extrémité supérieure de l'anneau de micro-variation (31) est disposée avec un trou d'insert (32) pour insérer l'extrémité du bouton (32), la paroi latérale du trou d'insert s'étend vers l'extérieur avec une bande de verrouillage (33).

4. Dispositif réglable de limitation de température selon la revendication 3, dans lequel l'élément de limitation de température (2) comprend une base (22), la base (22) est disposée avec une chambre (23) pour placer l'anneau de micro-variation (31), la paroi latérale de la chambre (23) est disposée avec une rainure (24) pour le déplacement du bouton ; la paroi intérieure de la chambre (23) est disposée avec au moins deux dents de verrouillage (25) servant d'engrenages de limitation de température (21) le long du côté long de la rainure (24) ; la bande de verrouillage (33) est verrouillée aux dents de verrouillage (25).

5. Dispositif réglable de limitation de température selon la revendication 4, dans lequel l'élément de limitation de position (4) comprend un corps principal (43) avec une cavité (44) avec deux extrémités s'ouvrant, la paroi latérale de la cavité (44) est disposée avec un trou (45) ; la cavité (44) enferme la chambre (23), le bouton est exposé hors de la paroi latérale du corps principal (43) au travers du trou (45) ; lorsque le bouton se déplace le long de la direction de longueur de la rainure (24), le corps principal (43) se déplace par rapport à la base (22).

6. Dispositif réglable de limitation de température selon la revendication 5, dans lequel l'extrémité de la paroi latérale de la cavité (44) à l'écart du trou (45) est en outre disposée avec une rainure de verrouillage (48), l'extrémité de l'anneau de micro-variation (31) à l'écart de la bande de verrouillage (33) s'étend vers l'extérieur avec une bosse (34), la bosse (34) est liée à la rainure de verrouillage (48).

7. Dispositif réglable de limitation de température selon l'une ou plusieurs des revendications 4 à 6, dans lequel l'extrémité du corps principal (43) à l'écart de la base (22) est disposée avec un anneau de bosse annulaire (46) ; la surface de l'anneau de bosse annulaire (46) s'étend vers l'extérieur verticalement avec une première paroi de butée et une seconde paroi de butée pour former l'extrémité d'engrenage à température élevée (41) et l'extrémité d'engrenage à température basse (42).

8. Dispositif réglable de limitation de température selon la revendication 7, dans lequel l'élément de réglage de température (5) comprend un manche (52) et une broche de position ; le manche (52) est raccordé à l'extrémité du corps principal (43) à l'écart de la base (22), et est raccordé de manière à pouvoir tourner à une bobine de vanne ; l'extrémité de la broche de position est disposée dans l'intervalle de réglage de température correspondant de l'anneau de bosse annulaire entre la première paroi de butée et la seconde paroi de butée, formant l'élément de butée (51).

9. Dispositif réglable de limitation de température selon l'une ou plusieurs des revendications 1 à 7, comprenant trois engrenages de limitation de température (21), l'extrémité de limitation à température élevée correspondante est respectivement à 36°, 38° et 40°.
